(19) Europäisches Patentamt
European Patent Office
Office européen des brevets

(11) Publication number: **0 329 053 A1**

(12) # EUROPEAN PATENT APPLICATION

(21) Application number: 89102439.0

(22) Date of filing: 13.02.89

(51) Int. Cl.4: C07F 9/09 , A61K 31/685

(30) Priority: 15.02.88 IT 1940388
16.02.88 IT 1941488
04.03.88 IT 1966688
04.03.88 IT 1966788
04.03.88 IT 1966888
04.03.88 IT 1966988
19.03.88 IT 2063888

(43) Date of publication of application:
23.08.89 Bulletin 89/34

(84) Designated Contracting States:
BE DE ES FR GB GR IT LU NL

(71) Applicant: MAGIS FARMACEUTICI S.p.A.
Via Cacciamali 34/36/38
I-25125 Brescia(IT)

(72) Inventor: Puricelli, Laura
Via Taramelli, 7
I-25100 Brescia(IT)

(74) Representative: Gervasi, Gemma
NOTARBARTOLO & GERVASI Srl Viale
Bianca Maria 33
I-20122 Milan(IT)

(54) **Choline esters of glycerophosphoric acids.**

(57) Esters and diesters of choline with glycerophosphoric acids, having general formula:

EP 0 329 053 A1

(I) 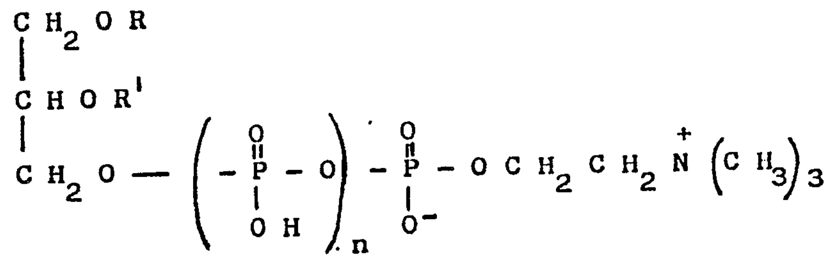

(II) 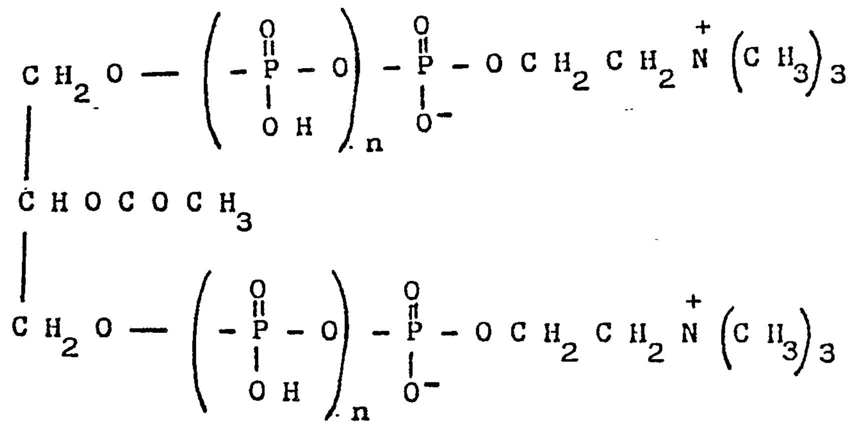

Wherein R, $R^1$ are H or acetyl, n = 1 or 0, useful for the therapy of dislipidemia and hyperlipoproteinemia.

## CHOLINE ESTERS OF GLYCEROPHOSPHORIC ACIDS

This invention relates to mono-esters and di-esters of choline with glycerophosphoric acids, optionally acetylated, to the processes for their preparation and to the therapeutic use of the same.

The compounds of the present invention are shown, in the case of the mono-esters, by the following general formula

(I)

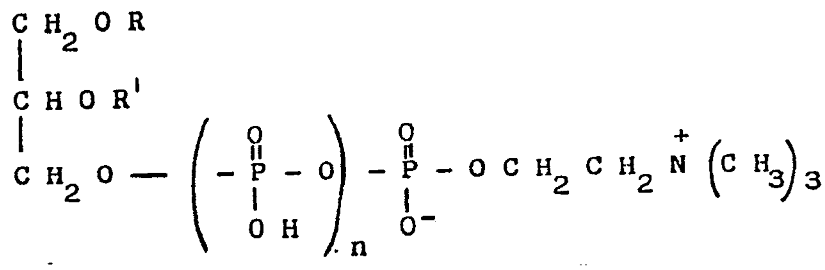

whereas, in the case of the di-esters, by the general formula:

(II)

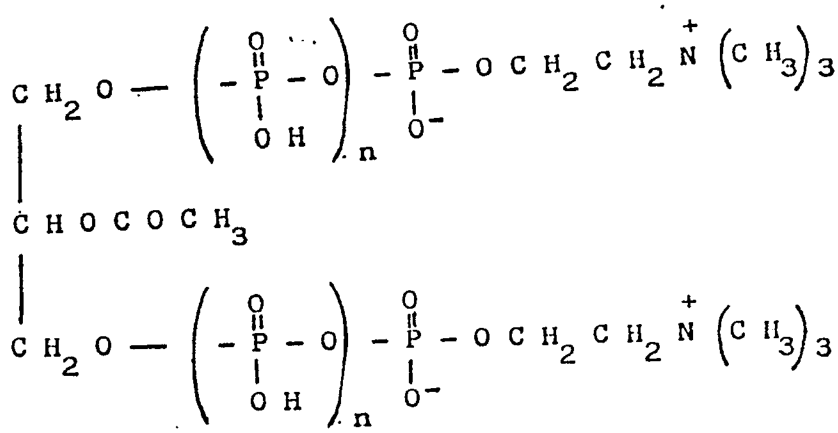

wherein R and $R^1$ are H or acetyl, n is 1 or zero, with the proviso that when n = 0 at least one of R and $R^1$ is acetyl.

The compounds according to the invention beside the form of "inner salt" as represented in formulas I and II above, can be obtained obviously also in form of salts having an external anion $X^-$ that is:

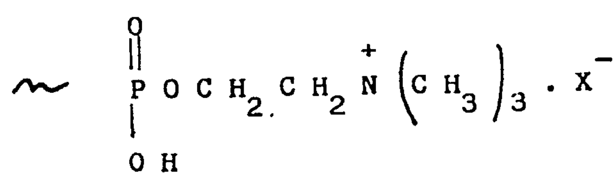

The compounds of formula I can be present in optically active form D or L or in racemic form.

The L or D derivatives are obtained starting from L-α-glycerophosphoric acid or D-α-glycerophosphoric acid which are obtained by procedure described by Bear, Fischer - J. Biol. Chem. 128, 491 (1939), 135, 321, (1940).

The invention also comprises pharmaceutically acceptable salts of the above defined choline esters of glycerophosphoric acids, in particular salts of Na, K, Ca, Mg, or of amines, aminoacids, aminoalcohols when the compound comprises diphosphoric acid groups and consequently are present acid not combined groups. If not available free acid phosphoric groups, salts can be formed through the combination of the quaternary nitrogen with acids such as, for instance, hydrochloric phosphoric, solphoric acid.

The compounds of both formulas (I) and (II) and their pharmaceutically acceptable salts show interesting activity in the therapy of hyperlipoproteinemic and dislipidemia, and are useful in the therapy of

cerebral arteriosclerosis.

The effect of these compounds in terms of modifying the lipoprotein state and the plasma cholesterol and triglyceride levels, altered by oral administration of olive oil, was studied in normally fed rats treated orally with 15 ml/kg of olive oil one hour before oral administration of the compound at various concentration.

The greatest effect, appearing two hours after the olive oil treatment and expressed as an increase in triglycerides and cholesterol, with reduction in the α-lipoproteins and increase in the β and pre-β fractions, was well antagonised by the compounds which proved able to return the parameters to normality, with ample attainment of the limits of statistical significance.

The antiinflammatory property of the compounds according to the invention are proved by the following test.

When administered orally at a dose of 100 mg/kg, the compounds are able to significantly reduce the experimental edema effect induced in male sprague-dawley rats of average weight 300 g, by intraperitoneal administration of triethyltin (10 mg/kg).

The acute toxicity of the compounds according to the invention was studied on the mouse by the Weill method (Weill C.S. Biomed. J. 8 249 (1952)). The $LD_{50}$ exceeds 1.500 mg/kg for all the compounds indicating that these compounds are well tolerated. For the compound of formula (I) wherein n = 1 and R, $R^1$ equal to H, the $LD_{50}$ is higher than 2000 mg/kg.

The preparation of the compounds of the invention can occur through several processes in particular starting from α- glycerophosphate

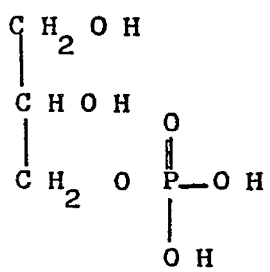

(III)

or from 1,2-isopropyliden-glycerol

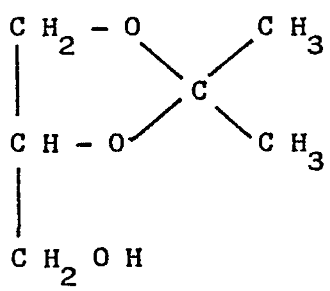

(IV)

The glycero-diphosphoric acid derivatives can be prepared by reacting glycerophosphoric acid (III) or its acetylated derivatives, with choline phosphoromorpholidate:

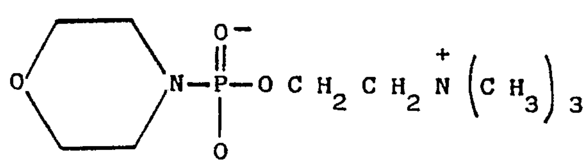

(V)

in presence of tetramethylammonium hydroxide in pyridine as a solvent. The compound (V) can be prepared by reacting phosphorylcholine with morpholine in the presence of dicyclohexylcarbo-diimmide in hydroalcoholic solvent.

In particular compounds of formula I and II can be prepared as follows:

a) compounds of formula I wherein n = 0. The compound (IV) is reacted with diphenylphosphoryl chloride (VI) in presence of pyridine according to the scheme:

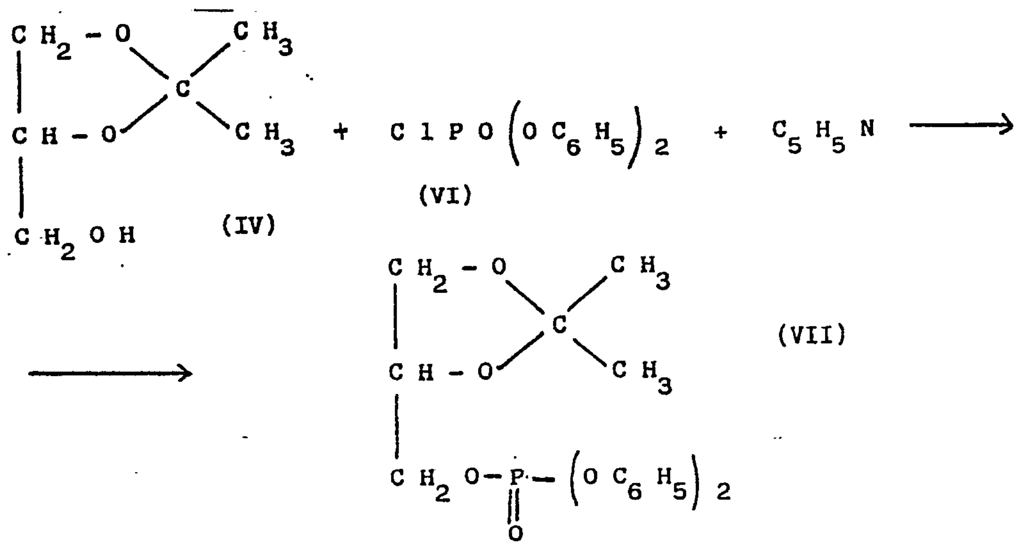

(IV) (VI) (VII)

The compound (VII) is then reacted with Ba $(OH)_2$ in hydroalcoholic solvent, by heating. Thereafter a $CO_2$ stream is fed into the solution until it becomes neutral to phenolplethaleine. From the solution obtained by filtering the reaction mixture, which contains the Ba salt of the phosphatidyl isopropylene glycerol, it is obtained, through addition of sulphuric acid, the compound:

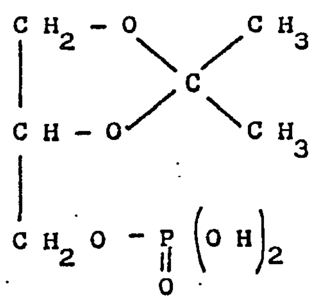

(VII, a)

The compound (VII.a) is hydrolysed with HCl to the α-glycerophosphate (III)

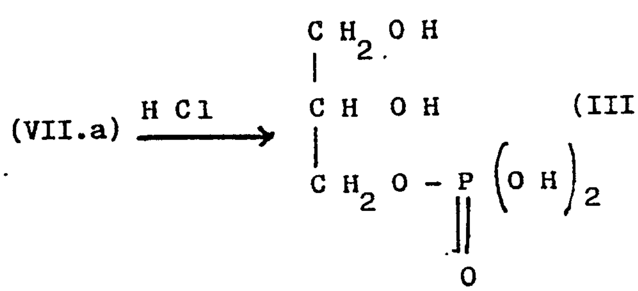


(VII.a) (III)

If the 1,2-di-acetyl-derivative is desired, the compound (III) is subjected directly to acetylation with $(CH_3 CO)_2$ O whereas if monoacetyl derivative is required, the group $-CH_2OH$ is previously converted in the group - $CH_2$ O-C($C_6$ $H_5)_3$ through the reaction with ($C_6$ $H_5)_3$ C Cl in presence of pyridine.

After acetylation the group - $CH_2$ OH is restored by reacting the group - $CH_2$ O - C($C_6$ $H_5)_3$ with H Br.

The choline esters of the mono- or di-acetyl derivatives of the acid (III) are obtained by reacting the same derivatives with the compounds X $CH_2$ $CH_2$ $\overset{+}{N}$ $(CH_3)_3$ . $X^-$ (X is chorine or bromine), in presence of sodium alcoholate in polar solvent (alcohols, dioxane, acetonitrile):

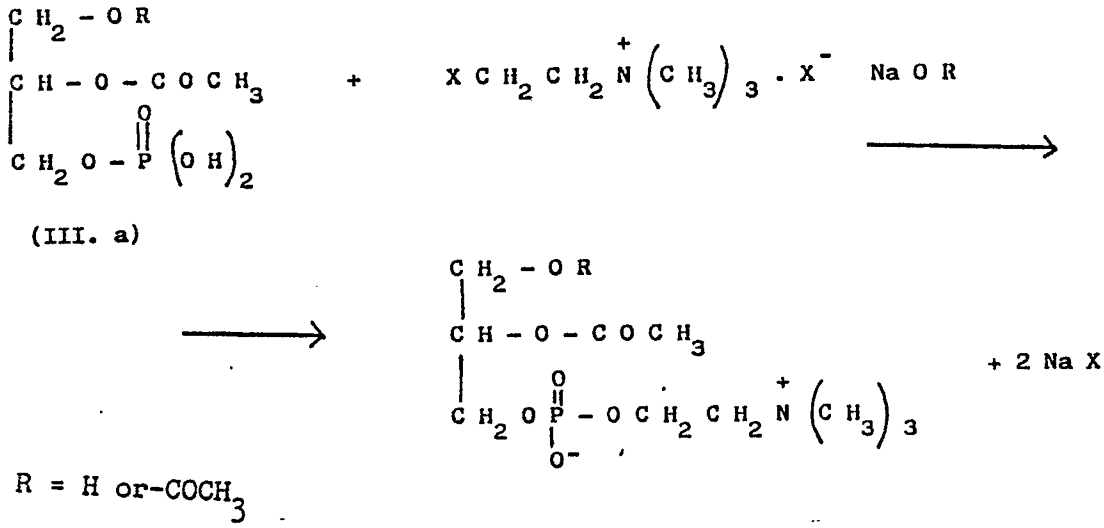


(III. a)

R = H or-$COCH_3$

b) Compouns of formula I wherein n = 1.

The glycerophosphoric acid (III) or its mono- or di-acetyl derivatives (III.a), are reacted with choline phosphoromorpholidate (V) as already mentioned:

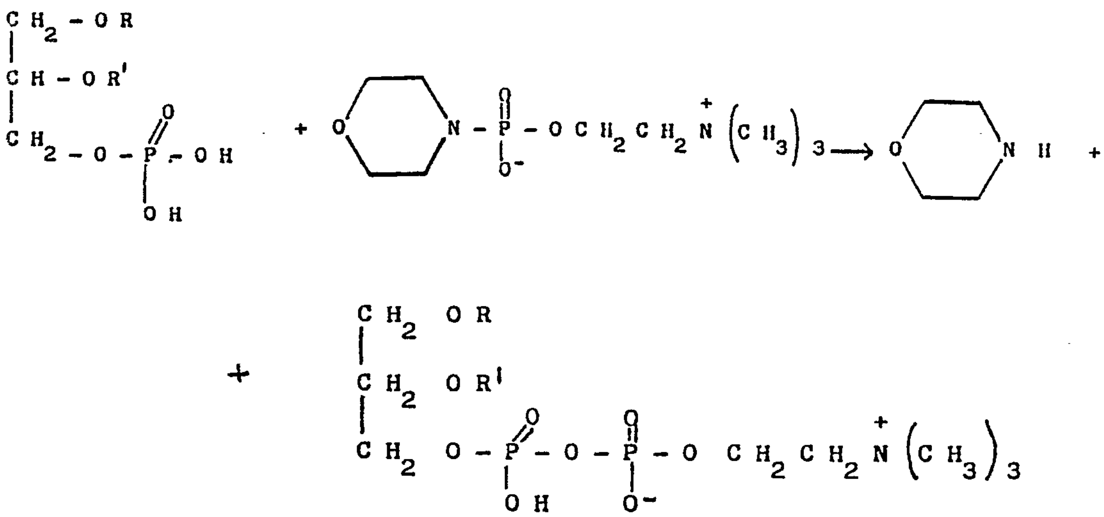

c) Compounds of formula II wherein n = 0.

Both the groups $-CH_2O$ OH in the glycerol are converted in group - $CH_2$ O - $C(C_6H_5)_3$, through the reaction with $(C_6H_5)$ C Cl in presence of pyridine. Then the oxydrile in position 2 is converted into the acetyl group by reacting with $(CH_3CO)_2$ O. After acetylation the oxydriles in position 1 and 3 are restored by reaction with H Br. Finally the introduction of phosporic acid groups at both position 1 and 3 occurs by reacting with diphenylphosphoryl chloride as shown in item a). The conversion of the phosphoric groups of the compound:

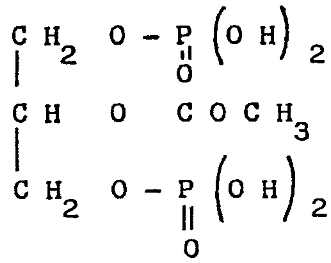

(VIII)

into choline ester groups occurs as described for the monoester derivative in item a).

d) Compounds of formula II wherein n = 1.

The conversion of the 2-acetyl 1,3 bis (phosphoryl)-glycerol (VIII) into the diphosphoric diester of choline is carried out by reacting both phosphoric groups with the choline phosphoromorpholidate (V) in the same working conditions shown in item b).

The following examples are merely illustrative of the specific preparations of the compounds according to the invention.

A - Compounds of formula I wherein n = 0

EXAMPLE 1

Diphenyl phosphoryl isopropylidene glycerol (VII).

150 ml of anhydrous pyridine, 28.8 g of pure diphenylphosphoryl chloride (VI) and 13.216 g of 1,2-isopropylideneglycerol (IV) are fed into a 500 ml moisture-tight flask fitted with a stirrer.

The mixture is stirred for two days at ambient temperature. After this time, 150 ml of water are added while stirring. The mixture is transferred into a rotary flask and evaporated to dryness under vacuum (bath temperature 45-50° C).

EXAMPLE 2

Phosphoryl isopropylidene glycerol (VII.a).

The residue obtained from vacuum evaporation containing diphenylphosphoryl isopropylidene glycerol and pyridine chloridine, is dissolved in 100 ml of alcohol. 350 ml of water and 140 g of barium hydroxide (octahydrate) are added to the solution. The mixture is heated under stirring for 65 minutes (from the commencement of boiling).

After this time, a strong carbon dioxide stream is fed into the solution until it becomes neutral to phenolphthalene.

The mixture is filtered through a filter prepared with a light bed of dicalite. The filter is washed with three 50 ml portions of water.

The aqueous solution is transferred into a rotary flask and about 150 ml of solution are removed under vacuum.

The residual solution is cooled and extracted with 200 ml of ether to remove the phenol.

The aqueous solution is dried under vacuum (bath temperature 45-50° C).

The residue is taken up in 150 ml of water, the solution obtained is diluted with an equal volume of 99% ethyl alcohol and the mixture allowed to stand for 1 hour. The voluminous precipitate containing impurities is filtered off and washed with small portions of 50% alkaline solution.

The mother liquors are pooled and 600 ml of 99% alcohol are slowly added.

The barium salt of phosphatidyl isopropylene glycerol precipitates, is filtered off and washed with 99% ethanol and then with ether.

About 20-21 g of product are obtained and dissolved in 150 ml of water under stirring, and while maintaining the temperature at about 10° C a 10% sulphuric acid solution is added in stoichiometric quantity relative to the barium present.

The mixture is allowed to stand for two hours and then filtered. The filtrate is dried in a rotary flask under vacuum (bath temperature 45-50° C). The residue of about 13 g consists of phosphoryl isopropylidene glycerol, te structure of which is confirmed by spectral analysis.

| Elementary analysis: | C | H | P |
|---|---|---|---|
| - calculated<br>-found | 34%<br>33.9% | 6.1%<br>6% | 14.62%<br>14.7% |
| M.W. 212 | | | |

EXAMPLE 3

α-glycerophosphate (III)

21.3 g of phosphoryl isopropylidene glycerol are dissolved in 150 ml of 0.1 N hydrochloric acid and the mixture left for 6 hours at ambient temperature. The hydrochloric acid is neutralised with 15 ml of 1 N sodium hydroxide. The solution is dried under vacuum in a rotary flask (bath temperature 45-50 °C).

The residue is treated with 200 ml of absolute alcohol and the mixture stirred for two hours at 40-45 °C. It is then cooled to 10 °C and filtered. The filtrate is evaporated to dryness and washed with acetone.

About 17g of α-glycerophosphate are obtained.

| Elementary analysis: | C | H | P |
|---|---|---|---|
| - calculated<br>-found | 20.94%<br>21.0% | 5.27%<br>5.20% | 18.00%<br>17.9 |
| M.W. 172.08 | | | |

EXAMPLE 4

1,2 Di-O-acetyl-glycero-3-phosphate

11.52 g of glycerophosphate are dissolved in 50 g of anhydrous pyridine in a flask fitted with a stirrer, and the mixture heated moderately until completely dissolved. It is cooled to ambient temperature and 15 ml of acetic anhydride added. The mixture is left to stand for 12 hours after which the solution is poured into 200 g of crushed ice and the mixture stirred until the ice has dissolved. The precipitate which forms is filtered off, washed with acetone and dried in an oven. About 14 g of product are obtained.

Spectral anlyses confirm the structure.

| Elementary analysis: | C | H | P |
|---|---|---|---|
| - calculated<br>- found | 32.82%<br>32.85% | 5.114%<br>5.2% | 12.10%<br>12.0% |
| M.W. 256.14 | | | |

EXAMPLE 5

(1,2-Di-O-acetyl-glycero-3-phosphoryl) choline

25.61 g of 1,2-di-O-acetyl glycerol-3-phosphate are transferred into a 500 ml flask. 91.2 ml of a 20% solution of tetramethyl-ammonium hydroxide in methanol are added.

The mixture is stirred until dissolved and the solution evaporated to dryness by distilling the solvent off under vacuum. 300 ml of acetonitrile or dioxane are added to the residue followed by 25 g of (2-bromoethyl)trimethylammonium bromide, and the mixture headed under reflux for 5 hours [24 hours if an equivalent quantity of (2-chloroethyl)trimethylammonium chloride is used].

After this time, the solvent is removed under vacuum. The residue is taken up in chloroform, the chloroform decanted and the residue after drying in an oven at 60° C is dissolved in 200 ml of absolute ethyl alcohol, sodium methylate is added in a quantity stoiohiometric with respect to the contained bromine (or chlorine) ion, the solution is filtered and evaporated to dryness. About 30 g of product are obtained.

Spectral analyses confirm the structure.

| Elementary analysis: | C | H | N | P |
|---|---|---|---|---|
| - calculated<br>- found | 42.2%<br>43.8% | 7.07%<br>7.1% | 4.104%<br>4.1% | 9.074%<br>9.0% |
| M.W. 341.29 | | | | |

EXAMPLE 6

(Isopropylidene glycero-phosphoryl) choline

Using the procedure of Example 5, (isopropylidene glycerol phosphoryl) choline is obtained starting from phosphoryl isopropylidene glycerol instead of 1,2-di-O-acetyl-glycerol-3-phosphate.

EXAMPLE 7

(1,2-Di-acetylglycero-3-phosphoryl) choline chloride

0.1 moles of (isopropylidene glycerol phosphoryl) choline are dissolved in a 250 ml of 0.2 N hydrochloric acid, the mixture is left for 6 hours at ambient temperature, the hydrochloric acid neutralised with 50 ml of 1 N sodium hydroxide and the solution evaporated to dryness under vacuum in a rotary flask (bath temperature 45-50° C).

The residue is dissolved in 200 ml of anhydrous ethanol at moderate temperature and the solution cooled and filtered.

The filtrate is evaporated to dryness under vacuum.

The residue is dissolved in 50 g of pyridine by heating the solution moderately, after which the solution is cooled to ambient temperature and 15 ml of acetic anhydride are added.

The solution is allowed to stand for 12 hours and is then poured into 200 g of crushed ice, the mixture stirred and then evaporated to an oily layer under vacuum (bath temperature 45-50° C).

The residue is taken up in 100 ml of a 1 N solution of HCl in absolute ethanol, the mixture heated until dissolved, the solution cooled to -5° C and left to crystallise.

The crystals obtained are filtered off, washed with acetone and dried. About 33 g of (1,2-di-O-acetyl-glycero-3-phosphoryl) choline chloride are obtained.

EXAMPLE 8

1-triphenylmethyl-2-acetyl-glycero-3-phosphate

11.52 g of α-glycerolphosphate and 19.32 g of triphenylmethylchloride are mixed with 50 ml of anhydrous pyridine in a flask fitted with a stirrer, and the mixture heated until completely dissolved.

It is cooled to ambient temperature and 7.5 ml acetic anhydride added. The mixture is left to stand for 12 hours after which the solution is poured into 200 g of crushed ice, the precipitate which forms being filtered off and dried.

It is meshed in 200 ml of wether. The insoluble paste is filtered off and dissolved in 200 ml of 95% ethanol, the solution is decolorised with carbon, cooled and allowed to crystallise.

About 12 g of product are obtained.

| Elementary analysis: | C | H | P |
|---|---|---|---|
| - calculated<br>- found | 63.15%<br>63.0% | 5.5%<br>5.6% | 6.8%<br>6.6% |
| M.W. 456 | | | |

EXAMPLE 9

2-acetyl-glycero-3-phosphate

A solution of 46 g of 1-triphenylmethyl-2-acetyl-glycero-3-phosfate is dissolved under hot conditions in 200 ml of acetic acid. The solution is cooled to about 10° C and 18 ml of a solution of dry hydrobromic acid in acetic acid are added and the mixture is stirred for about 45 seconds.

The triphenylmethylbromide which forms during the reaction is separated by filtration and the filtrate transferred immediately into 500 ml of cold water. The solution obtained is extracted repeatedly with ether. The aqueous phase separates and is evaporated to dryness under vacuum.

The residue is taken up in 100 ml of 95% ethanol and heated until dissolved, the solution filtered and cooled to 10° C, and then left standing to obtain about 20 g of product.

Spectral analyses confirm the structure.

| Elementary analysis: | C | H | P |
|---|---|---|---|
| - calculated<br>- found | 28%<br>28.1% | 5.14%<br>5.0% | 14.5%<br>14.4% |
| M.W. 214 | | | |

EXAMPLE 10

(2-O-acetyl-glycero-3-phosphoryl) choline

21.4 g of 2-O-acetyl-glycero-3-phosphate are made to react 500 ml flask in the same working conditions and with the same amounts of reactant as in example 5.

About 27 g of product are obtained.

Spectral analyses confirm the structure.

| Elementary analysis: | C | H | N | P |
|---|---|---|---|---|
| - calculated<br>- found | 40.134%<br>40.2% | 7.486%<br>7.5% | 4.68%<br>4.65% | 10.348%<br>10.28% |
| M.W. 299.26 | | | | |

B - Compounds of formula I wherein n = 1

EXAMPLE 11

2-O-acetyl glycero-3-diphosphoryl choline

A) Choline phosphoromorpholidate

A solution of 20.6 g of dicyclohexylcarbo-diimide (DCC) in 375 ml of tert. butyl alcohol is added dropwise to a reflux-heated and agitated solution of 18 g phosphorylcholine in a mixture of 250 ml water, 250 ml tert, butyl alcohol and 8.71 ml of purified morpholine.

The addition is completed in 3-4 hours and the mixture is further heated under reflux until electrophoretic analysis shows a spot of different type than phosphorylcholine.

If starting material remains, 10.3 g of DCC and 4.4 ml of morpholine are added to the solution and heating is continued under reflux until a single spot remains.

The mixture is then cooled to ambient temperature and the crystalline material is removed by filtration and washed with tert. butyl alcohol.

The filtrate is evaporated under vacuum until the tert butyl alcohol is eliminated, the remaining aqueous phase being then extracted three times with ether (filtration is necessary after the first extraction).

The solution is then evaporated to dryness under vacuum. The residue is dissolved in 120 ml of methyl alcohol, the solution possibly filtered and its volume reduced under vacuum to about 90 ml.

1000 ml of ether are slowly added to the methanol solution under agitation. The precipitate which forms is ground and oven-dried under vacuum.

B) 2-O-acetyl-glycero-3-diphosphoryl choline

21.4 g of 2-O-Acetyl-glycero-3-phosphate prepared as in example 9, are transferred into a 500 ml flask.

91.2 ml of a 20% solution of tetramethylammonium hydroxide in methanol are added.

The mixture is agitated until dissolved and the solution evaporated to dryness under vacuum.

The choline phosphoromorpholidate prepared as in A) is added to the residue. The mixture is dissolved in distilled o-chlorophenol (1000 ml), 1000 ml of anhydrous pyridine are added to the obtained solution and the mixture left in a dark environment for 4 days.

The pyridine is eliminated under vacuum, 1000 ml of water are added and the o-chlorophenol eliminated with chloroform.

Ammonia is added to the aqueous solution to pH 9.5 and the solution directly transferred to a column (5 x 150 cm) of Dowex 1 x 4 (formate) (200-400 mesh).

The column is washed with water to remove the phosphorylcholine and is then eluted with a 0.01 M formic acid solution. The O-(2-acetyl-glycero-3-diphosphoryl) choline which is coevaporated with ethanol to dryness.

About 15 g of product are obtained.

Spectral analyses confirm the structure.

| Elementary analysis: | C | H | N | P |
|---|---|---|---|---|
| - calculated<br>- found | 31.66%<br>31.5% | 6.06%<br>6.0% | 3.7%<br>3.75% | 16.36%<br>16.4% |
| M.W. 379 | | | | |

EXAMPLE 12

choline α-glyceryl disphosphate

17.208 g of glycerophosphoric acid are transferred into a 500 ml flask, 91.2 ml of a 20% solution of tetramethylammonium hydroxide in methanol are added.

The mixture is agitated until dissolved and the solution evaporated to dryness under vacuum. The choline phosphoromorpholidate prepared as in example 11 is added to the residue. The mixture is dissolved in distilled o-chloro-phenol (1000 ml), 1000 ml of anhydrous pyridine are added to the obtained solution and the mixture left in a dark evironment for 4 days. The pyridine is eliminated and vacuum, 1000 ml of water are added and the o.chlorophenol eliminated with chloroform. The solution is adjusted to pH 9.5 with ammonia and directly transferred to a column (5 x 150 cm) of Dowex 1 x 4 (formate) (200-400 mesh).

The column is washed with water to remove the phosphorylcholine and is then eluted with a 0.01 M formic acid solution. Choline α-glyceryl diphosphate separates.

The separation of the choline α-glyceryl diphosphate is followed by thin layer chromatography. The solution containing choline α-glyceryl disphosphate is coevaporatede with ethanol to dryness.

The product is crystallised from ethanol-acetone. 15 g of product are obtained.

Spectral analyses confirm the structure.

| Elementary analysis: | C | H | N | P |
|---|---|---|---|---|
| - calculated %<br>- found % | 28.5<br>28.48 | 6.23<br>6.3 | 4.15<br>4.18 | 18.4<br>18.25 |
| M.W. 337 | | | | |

EXAMPLE 13

1,2-Di-O-acetyl-glycero-3-(diphosphoryl)choline

25.61 g of 1.2-di-O-acetyl glycero-3-phosphate are transferred into a 500 ml flask. 91.2 ml of a 20% solution of tetramethylammonium hydroxide in methanol are added.

The mixture is stirred until dissolved and the solution evaporated to dryness by distilling the solvent off under vacuum. The choline phosphoromorpholidate prepared as in example 11.A in the same amount is added to the residue. The mixture is dissolved in distilled o.chlorophenol (1000 ml). 1000 ml of anhydrous pyridine are added to the obtained solution and the mixture left in a dark environment for 4 days. The pyridine is eliminated under vacuum, 1000 ml of water are added and the O-chlorophenol eliminated with cholorform. Ammonia is added to the aqueous solution to pH 9.5 and the solution directly transferred to a column (5 x 150 cm) of Dowex 1 x 4 (formate) (200-400 mesh).

The column is washed with water to remove the phosphorylcholine and is then eluted with a 0.01 M formic acid solution to separate the O-(1,2-di-O-acetyl-glycero-3-diphosphoryl) choline. (The separation is followed by means of thin-layer chromatography).

The solution containing 1,2-di-O-acetyl-glycero-3-(diphosphoryl) choline is coevaporated with ethanol to

dryness. About 17 g of product are obtained.

Spectral analyses confirm the structure.

| Elementary analysis: | C | H | N | P |
|---|---|---|---|---|
| - calculated<br>- found | 34.2%<br>34.3% | 5.93%<br>5.9% | 3.32%<br>3.2% | 14.72%<br>14.8% |
| M.W. 421 | | | | |

EXAMPLE 14

2-monoacetyl glycerol

9.21 g of glycerol and 56 g of triphenylmethylchloride are mixed with 100 ml of anhydrous pyridine in a flask fitted with a stirrer, and heated until completely dissolved.

The solution is cooled to ambient temperature and 7.5 ml of acetic anhydride are added.

The mixture is allowed to stand for 12 hours and the solution then poured into 300 g of crushed ice, agitated until the ice has completely melted, the precipitate acidified with hydrochloric acid and extracted with three 150 ml portions of chloroform.

The chloroform extracts are washed with an aqueous acid solution, dried with anhydrous sodium sulphate and evaporated to dryness.

The residue is dissolved in 200 ml of acetic acid under hot conditions.

The solution is cooled to about 10° C, 36 ml of a solution of dry hydrobromic acid in acetic acid added and the mixture agitated for about 45 seconds.

The triphenylmethylbromide which forms during the reaction is separated by filtration, the filtrate concentrated, transferred into 500 ml of 20% sodium chloride solution and the aqueous phase extracted repeatedly with ethyl acetate.

The organic phase is separated, dried with anhydrous magnesium sulphate and evaporated to dryness under vacuum.

About 20 g of product are obtained.

Spectral analyses confirm the structure

| Elementary analysis: | C | H |
|---|---|---|
| - calculate %<br>- found % | 44.769<br>44.8 | 7.515<br>7.52 |
| M.W. 134.13 | | |

EXAMPLE 15

2-acetyl glycero-1,3-diphosphate

300 ml of anhydrous pyridine, 57.6 g of diphenylphosphoryl chloride and 13.42 g of 2-acetyl- glycerol are transferred into a 1000 flask fitted with a stirrer and protected from moisture. The mixture is agitated for two days at ambient temperature.

After this time, 200 ml of water are added under agitation, the mixture transferred into a rotary flask and evaporated to dryness under vacuum (bath temperature 45-50° C).

The residue obtained is dissolved in 250 ml of alcohol, 400 ml of water and 280 g of barium hydroxide

(octahydrate) are added to the solution, and the mixture heated under agitation for 65 minutes (from commencement of boiling).

When this time has elapsed, an energetic stream of carbon dioxide is fed into the solution until it becomes neutral to phenolphthalene.

The mixture is filtered through a filter prepared with a light bed of dicalite, and the filter washed with 3 x 50 ml portions of water.

10% sulphuric acid is slowly added to the aqueous solution until no further precipitaion is observed.

The mixture is filtered and the filtrate evaporated to dryness under vacuum in a rotary flask (bath temperature 45-50° C).

The residue is dissolved in 300 ml of 15% ethyl alcohol, filtered, and the filter washed with two 50 ml portions of 95% ethyl alcohol.

500 ml of acetone are added slowly to the alcoholic solution, the precipitate is filtered off and dried in a oven at 40° C under vacuum.

Spectral analyses confirm the structure.

| Elementary analysis | C | H | P |
|---|---|---|---|
| - calculated %<br>- found % | 19.12<br>19 | 4.8<br>4.8 | 12.35<br>12.25 |
| M.W. 251 | | | |

EXAMPLE 16

2-O-acetyl-1,3-di(phosphorylcholine)-glycerol.

25.1 g of 2-O-acetyl-1,3-diphosphoryl-glycerol are transferred into a 1000 ml flask and 182.4 ml of a 20% solution of tetramethylammonium hydroxide in methanol are added.

The mixture is agitated until a solution forms, which is then evaporated to dryness by boiling off the methanol under vacuum. 500 ml of acetonitrile or dioxane or tetrahydrofuran are added to the residue followed by 55 g of (2-bromoethyl)trimethylammonium bromide, and the mixture heated under energetic agitation for 5 hours, or 24 hours if an equivalent quantity of (2-bromoethyl) trimethylammonium chloride is used.

After this time, the solvent is removed under vacuum.

The residue is taken up inh chloroform, agitated and the solvent decanted. The residue is dissolved in 300 ml of absolute ethyl alcohol, and a sodium ethylate solution is added in a quantity which is stoichiometric with respect to the bromine (or chlorine) ion contained. The obtained sodium bromine (or chloride) is filtered off and 500 ml of ethyl ether are added. The precipitate is filtered off and dried in an oven at 40° C under vacuum.

Spectral analyses confirm the structure.

| Elementary analysis | C | H | N | P |
|---|---|---|---|---|
| - calculated %<br>- found % | 38.8<br>38.9 | 7.32<br>7.2 | 6.01<br>5.95 | 13.36<br>13.4 |
| M.W. 464 | | | | |

EXAMPLE 17

2-O-Acetyl-1,3-bis(disphosphorylcholine)-glycerol

24.41 g of 2-O-Acetyl-glycero-1,3-diphosphate are transferred into a 1000 ml flask and 182.4 ml of a 20% solution of tetramethylammonium hydroxide in methanol are added.

The mixture is agitated until a solution forms, which is then evaporated to dryness by boiling off the solvent under vacuum.

The choline phosphoromorpholidate prepared as in example 11.A but in double amount is added to the residue. The mixture is dissolved in distilled O-chloro-phenol (1000 ml), 1000 ml of anhydrous pyridine are added to the obtained solution and the mixture left in a dark environment for 4 days.

The pyridine is eliminated under vacuum, 1000 ml of water are added and the O-chlorophenol eliminated with chloroform.

Ammonia is added to the aqueous solution until pH 9.5 is reached and the solution directly transferred to a column (5 x 150 cm) of Dowex 1 x 4 (formate) (200-400 mesh).

The column is washed with water to remove the phosphorylcholine and is then eluted with a 0,01 M formic acid solution to separate the 2-O-Acetyl-1,3-bis(diphosphoryl-choline)-glycerol (the separation is followed by means of thin layer chromatography).

The solution containing 2-O-Acetyl-1,3-bis(diphosphoryl-choline)-glycerol is evaporated with ethanol to dryness.

About 15 g product are obtained.

Spectral analyses confirm the structure.

| Elementary analysis: | C | H | N | P |
|---|---|---|---|---|
| - calculated<br>- found | 28.85%<br>228.9% | 5.81%<br>5.83% | 4.486%<br>4.5% | 19.84%<br>19.75% |
| M.W. 624.35 | | | | |

1362

**Claims**

1) Esters and diesters of choline with glycerophosphoric acids represented by the following general formulas:

(I)

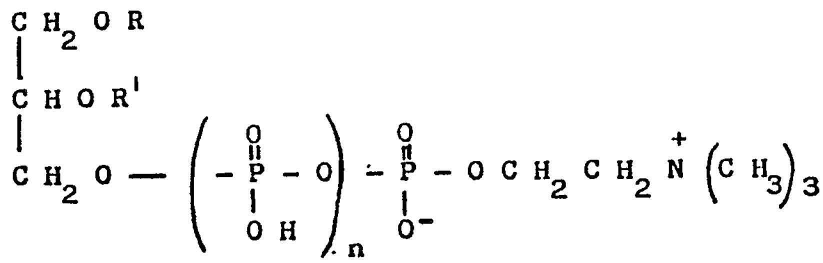

(II)

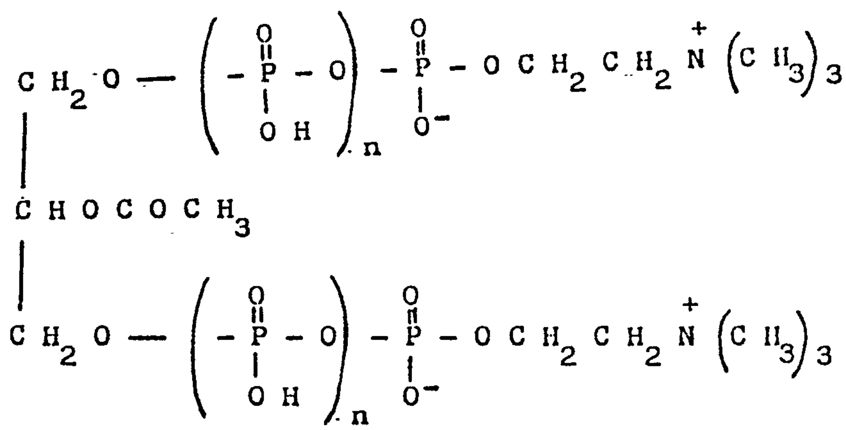

wherein R and $R^1$ are H or acetyl, n is 1 or zero, with the proviso that when n = o, at least one of R and $R^1$ is acetyl.

2) Compounds of formula I according to claim 1 wherein n = 1

3) Compounds of formula II according to claim 1 wherein n = 0

4) Compounds of formula II according to claim 1 wherein n = 1

5) Compounds of formulas (I) and (II) according to claim 1, wherein the quaternary amonium group is salified with an external anion.

6) Pharmaceutical composition characterized in that it contains as its active principle a therapeutically effective amount of one or more compounds of claim 1 or 5, their pharmaceutically acceptable salts, optionally combined with carriers, diluents, solvents, eccipients.

7) Use of compounds according to claim 1 or 5 for preparing pharmaceutical composition suitable for oral or intravenous or intramuscular route, useful in the therapy of dislipidemia and hyperlipoproteinemia.

8) Use compounds according claim 1 or 5 for preparing pharmaceutical composition suitable for oral or intravenous or intramuscular or topic route, useful as antiinflammatory medicament.

European Patent Office

# EUROPEAN SEARCH REPORT

Application Number

EP 89 10 2439

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | JOURNAL OF CHROMATOGRAPHY, vol. 270, 1983, pages 344-347, Elsevier Science Publishers B.V., Amsterdam, NL; M.C. MOSCHIDIS: "Silicic acid column chromatography of phosphonolipids. V. Separation of phosphone-amide AGEPC, phosphone-amide AGEPE, monoether biphosphone-, diether phosphone-glycerides and diacetyl phosphono-glycerides from their phosphoryl analogues and other related lipids and phospholipids" * Page 346; table II * --- | 1 | C 07 F 9/09<br>A 61 K 31/685 |
| X | JOURNAL OF THE AMERICAN CHEMICAL SOCIETY, vol. 106, no. 18, 5th September 1984, pages 5246-5251, American Chemical Society; E. AYANOGLU et al.: "Mass spectrometry of phospholipids. Some application of desorption chemical inonization and fast atom bombardment" * Page 5247, right-hand column - page 5248, left-hand column, top; page 5249, table I, compound 1 * --- | 1 | TECHNICAL FIELDS SEARCHED (Int. Cl.4)<br>C 07 F 9/00<br>A 61 K 31/00 |
| X | RECUEIL DES TRAVAUX CHIMIQUES DES PAYS-BAS, vol. 79, no. 7, July 1960, pages 661-674, D.B. Centen's Uitgeversmaatschappij, Hilversum, NL; F. KÖGL et al.: "Metabolism and functions of phosphatides - The preparation of a series of L-alpha-lecithins" * Page 663, formulas III,IV; page 665, compound 1a; page 667, formula VI; page 668, compound 11 * --- -/- | 1 | |

The present search report has been drawn up for all claims

| Place of search | Date of completion of the search | Examiner |
|---|---|---|
| THE HAGUE | 12-05-1989 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application Number

EP 89 10 2439

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 186 803 (NEOPHARMED S.p.A.)<br>* Claims *<br>--- | 1,6-8 | |
| Y | GB-A-2 057 872 (LPB ISTITUTO FARMACEUTICA S.p.A.)<br>* Claims *<br>--- | 1,6-8 | |
| Y | EP-A-0 201 623 (LPB ISTITUTO FARMACEUTICO S.p.A.)<br>* Claims *<br>----- | 1,6-8 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 12-05-1989 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document